# EUROPÄISCHE PATENTSCHRIFT

(11) **EP 1 788 220 B1**
(45) Veröffentlichungstag und Bekanntmachung des Hinweises auf die Patenterteilung: **08.12.2010**
(21) Anmeldenummer: 06020353.6
(22) Anmeldetag: 28.09.2006
(51) Int. Cl.: F02B 37/16, F02B 37/24, F02D 41/00

(54) **Verfahren zur Steuerung eines Turboladers mit turbinenseitiger Ladedruck-Regelung und einem Umluftventil**
Method to control a turbocharger with a control of the supercharging pressure at the turbine side and a bypass valve
Procédé de commande pour commander un turbocompresseur avec commande de la pression de suralimentation dans le côté de la turbine et une vanne de dérivation

(30) Priorität: 14.11.2005 DE 102005054525
(43) Veröffentlichungstag der Anmeldung: 23.05.2007
(73) Patentinhaber: Dr. Ing. h.c. F. Porsche AG, 70435 Stuttgart (DE)
(72) Erfinder: Hofstetter, Matthias, 77975 Ringsheim (DE)

(56) Entgegenhaltungen:
- EP-A- 1 031 722
- WO-A-2005/017329
- AT-U1- 4 195
- JP-A- 2005 009 314
- US-B1- 6 701 710

## Beschreibung

Die Erfindung betrifft ein Verfahren zur Steuerung eines Turboladers, wie es beispielsweise aus der US 1,670,710 BI bekannt ist. Bei diesem bekannten Verfahren wird in einem Luftsammler einen turbinenseitig geregelten Ladedruck erzeugt, und der ein Umluftventil aufweist, das einen Strömungsquerschnitt zwischen dem Luftsammler und einer Saugseite des Turboladers bei einer Verringerung eines aus dem Luftsammler ausfließenden Luftmassenstroms vorübergehend öffnet.
Turbolader mit einem oder mehreren Umluftventilen werden bei Ottomotoren verwendet, die zumindest in bestimmten Betriebszuständen gedrosselt betrieben werden. Die Drosselung wird durch einen verringerten Öffnungsquerschnitt eines Luftmassenstellglieds zwischen Brennräumen des Verbrennungsmotors und dem Luftsammler erzielt. Als Stellgröße kommt zum Beispiel die Stellung einer Drosselklappe oder ein Öffnungshub von Einlassventilen in Frage.

Bei einem hohen Luftmassenstrom, wie er sich als Folge einer hohen Motordrehzahl und/oder hohen Werten der Brennraumfüllung ergibt, stellt sich eine hohe Laderdrehzahl und ein großer Ladefuftmassenstrom in den Luftsammler ein. Wird das Luftmassenstellglied aus einem solchen Betriebszustand heraus schnell geschlossen, nimmt der aus dem Luftsammler ausfließende Luftmassenstrom sehr schnell ab. Aufgrund der Trägheit des Ladeluftstroms kommt es ohne Gegenmaßnahmen zu einem Druckanstieg in dem Luftsammler bei abnehmendem Ladeluftmassenstrom. Dabei kann sich die Strömung von den Verdichterschaufeln lösen und die Luft durch den Verdichter zurückströmen lassen, was den Druck absinken lässt.

Da sich die Drehzahl des Verdichterrads aufgrund der hohen Rotationsenergie nur langsam an den verringerten Ladeluftbedarf anpasst, kehrt sich die Strömungsrichtung nach Einstellung entsprechender Druckverhältnisse über dem Verdichter erneut um. Der Vorgang wiederholt sich in rascher Folge. Wegen des dabei entstehenden Geräusches wird das periodische Wiederholen dieses Vorgangs auch als Pumpen bezeichnet. Um dieses für die Lebensdauer des Verdichterrades und für den Geräuschkomfort nachteilige Pumpen zu vermeiden, wird der Luftsammler durch ein vorübergehendes Öffnen des Umluftventils zur Saugseite des Turboladers entlastet.

Ein Verfahren der eingangs genannten Art, das mit einem solchen Umluftventil arbeitet, ist aus der Reihe "Die Bibliothek der Technik, Band 103, Abgasturbolader", Verlag Moderne Industrie, D-86896 Landsberg/Lech, ISBN 3-478-93263-7, dort Seite 47, bekannt. Aus derselben Veröffentlichung, Seite 24, sind Rezirkulationskanäle bekannt, die einen Teil der bereits in den Verdichter eingeströmten Luft wieder auf in den Hauptstrom vor dem Verdichter zurückführen. Dadurch soll die Pumpgrenze des Verdichters zu kleineren Volumenströmen verschoben werden, was zu einer Vergrößerung des nutzbaren Bereichs des Verdichterkennfelds führt. Aus der EP 1 275 852 A2 ist diesem auch als Kennfeldstabilisierung bekannten Zusammenhang ein steuerbarer Bypass zum Verdichterrad bekannt. Nach der EP 1 275 852 soll der Bypass in der Regel geschlossen sein und in den drei folgenden Fällen geöffnet werden:
Bei einer Ladedrucksteigerung aus einem Betriebspunkt mit niedriger Last soll der geöffnete Bypass eine höhere Verdichterdrehzahl erlauben.
Eine Öffnung an der Pumpgrenze des Verdichters soll zu einer Kennfelderweiterung durch einen Rezirkulationsstrom führen; insbesondere nach einer Volllastbeschleunigung mit anschließender abrupter Gaswegnahme soll ein Pumpen des Verdichters verhindert werden.
Durch Steuern des Bypassquerschnitts soll eine Lastregelung alternativ oder ergänzend zu einer Drosselklappenregelung erfolgen.

Bisher erfolgte die turbinenseitige Regelung des Ladedrucks bei Ottomotoren durch eine Klappe in einem Bypass-Kanal, über den Abgas bedarfsweise an der Turbine vorbeigeleitet wurde. Bei Dieselmotoren werden auch Turbolader verwendet, bei denen die turbinenseitige Regelung des Ladedrucks mit Hilfe einer verstellbaren TurbinenGeometrie erfolgt. Dann strömt das gesamte Abgas über die Turbine, was eine Nutzung eines größeren Teils der Abgasenergie und eine optimierte Einstellung des Turbinen-Strömungsquerschnitts für jeden Betriebspunkt erlaubt. Gegenüber der Bypass-Regelung ergibt sich als erwünschte Folge ein höherer Wirkungsgrad des Turboladers und damit auch ein höherer Wirkungsgrad des Verbrennungsmotors. Dieselmotoren werden in der Regel entdrosselt mit hohem Luftüberschuss betrieben. Das beschriebene Pumpen tritt daher dort nicht auf.
In Zukunft sollen Turbolader mit steuerbarem Turbinen-Strömungsquerschnitt auch bei Ottomotoren eingesetzt werden. Bei einem bestimmten Turbinen-Strömungsquerschnitt, im Allgemeinen bei maximalem Turbinen-Strömungsquerschnitt, erzeugt ein solcher Turbolader einen minimalen Ladedruck, der im Folgenden auch als Grundladedruck bezeichnet wird. Dieser Grundladedruck stellt den minimalen Ladedruck dar, den der Turbolader bei gegebenem Abgasmassenstrom bereitstellen kann.

Da man Turbolader im Allgemeinen so auslegt, dass sie im untersten Motordrehzahlbereich bei kleinem Abgasmassenstrom möglichst viel Ladedruck bereitstellen, ergibt sich bei größeren Abgasmassenströmen, also bei höheren Motordrehzahlen und/oder Brennraumfüllungen, zwangsläufig ein hoher Wert für den Grundladedruck.

Es gibt Umstände, unter denen der Ladedruck abgesenkt werden muss, um Bauteile des Verbrennungsmotor vor Beschädigung zu schützen. Als Beispiel sei hier nur eine schlechte Kraftstoffqualität genannt, die zu einem klopfenden Motorbetrieb führt. Die Klopfneigung kann unter anderem durch Reduzierung des Ladedrucks verringert werden. Ein hoher Grundladedruck ist daher unter diesen Umständen nachteilig. Die Begrenzung des Ladedrucks könnte in solchen Fällen durch Ansteuerung einer Turbinen-Bypass-Klappe erfolgen. Der Nachteil dieser Lösung besteht darin, dass für die Sonderfälle, in denen der Grundladedruck zu hoch ist, ein weiteres Stellglied zur turbinenseitigen Einstellung des Ladedrucks mit den daraus resultierenden Nachteilen für Bauraum, Gewicht und Kosten bereit zu stellen ist.

Vor diesem Hintergrund besteht die Aufgabe der Erfindung in der Angabe einer Steuerung eines Turboladers mit verbessertem Motorwirkungsgrad, das die genannten Nachteile einer Lösung mit einem zusätzlichen Stellglied für eine turbinenseitige Regelung des Ladedrucks vermeidet.

Diese Aufgabe wird bei einem Verfahren der eingangs genannten Art dadurch gelöst, dass der Ladedruck in bestimmten Betriebszuständen ergänzend zur turbinenseitigen Regelung, die durch Verstellung eines Turbinen-Strömungsquerschnitts erfolgt, durch Öffnen des Umluftventils verringert wird.

### Vorteile der Erfindung

Durch Verwenden des auf der Verdichterseite ohnehin vorhandenen Umluftventils zur Verringerung des Ladedrucks im Luftsammler in bestimmten Betriebszuständen kann der Ladedruck dort auf Werte unterhalb des Grundladedrucks der Turbine verringert werden. Dies erlaubt die Verwendung eines Turboladers mit verstellbarem Strömungsquerschnitt, was zu der erwünschten Verbesserung des Wirkungsgrades führt. Das Umluftventil wird dabei zusätzlich zu seiner bekannten Funktion zur Verhinderung des Pumpens insgesamt mehrfach genutzt. Durch diese Mehrfachnutzung kann auf ein zusätzliches turbinenseitiges Stellglied verzichtet werden. Die mit einem solchen Stellglied verbundenen Nachteile werden damit vollständig vermieden.

Weitere Vorteile ergeben sich aus der Beschreibung, den abhängigen Ansprüchen und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: einen Verbrennungsmotor mit einem Turbolader; und
- Fig. 2: ein Flussdiagramm als Ausführungsbeispiel eines erfindungsgemäßen Verfahrens.

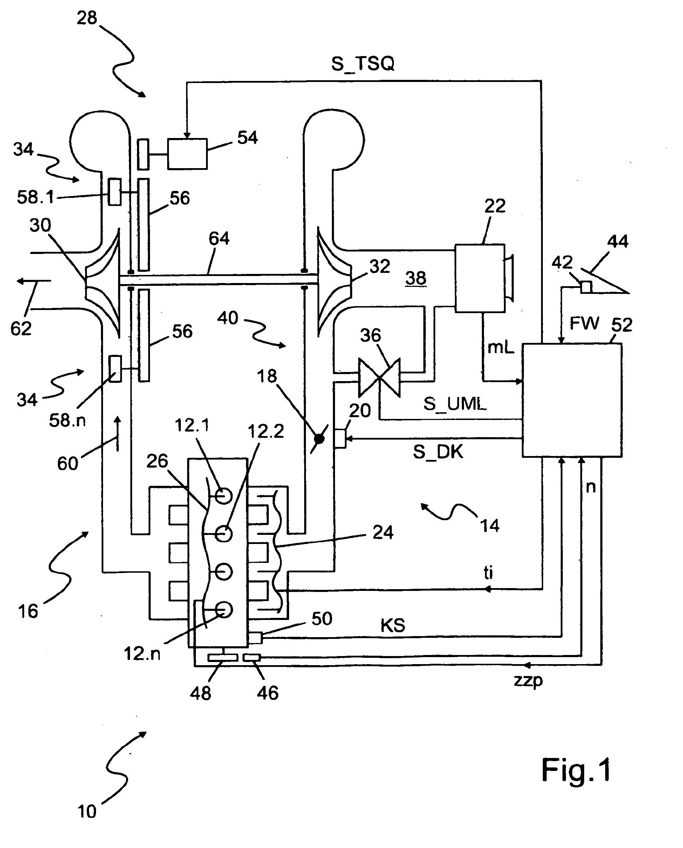

Im Einzelnen zeigt Fig. 1 einen Verbrennungsmotor 10 mit Brennräumen 12.1, 12.2, ..., 12.n, die aus einem Ansaugsystem 14 mit Luft oder Kraftstoff/Luft-Gemisch befüllt werden und deren Abgase über ein Abgassystem 16 abgeführt werden.

Die Menge der einströmenden Luft oder des einströmenden Gemisches wird über ein Füllungsstellglied eingestellt, das in der Darstellung der Fig. 1 durch eine Drosselklappe 18 mit einem zugehörigen Drosselklappensteller 20 repräsentiert wird. Ein Füllungssensor 22, der als Luftmassenmesser oder Saugrohrdrucksensor realisiert sein kann, erfasst die Menge mL der in die Brennräume 12.1, ...., 12.n fließenden Luft.

Über eine Injektoranordnung 24 wird der Luft Kraftstoff zugemessen, wobei die Zumessung entweder im Ansaugsystem 14 (Saugrohreinspritzung) oder durch direkte Einspritzung von Brennstoff in die Brennräume 12.1, ... 12.n (Direkteinspritzung). Eine Zündkerzenanordnung 26 dient zur Zündung der Brennraumfüllungen.

Der in der Figur 1 dargestellte Verbrennungsmotor 10 weist einen Abgasturbolader 28 auf, dessen Turbinenrad 30 von den ausgestoßenen Abgasen angetrieben wird und das seinerseits ein Verdichterrad 32 im Ansaugsystem 14 antreibt. Der Abgasturbolader 28 weist ferner einen steuerbaren Turbinen-Öffnungsquerschnitt 34 auf. Auf der Verdichterseite des Turboladers 28 liegt ein steuerbares Umluftventil 36 zwischen einer Saugseite 38 des Turboladers 28 und einem Luftsammler 40, in dem sich ein Ladedruck p_lade einstellt.

Drehmomentanforderungen FW eines Fahrers werden durch einen Fahrerwunschgeber 42 erfasst, der die Stellung eines Fahrpedals 44 eines Kraftfahrzeugs erfasst, das von dem Verbrennungsmotor 10 angetrieben wird. Ein Drehwinkelsensor 46 tastet Winkelmarkierungen eines drehfest mit einer Kurbelwelle des Verbrennungsmotors 10 verbundenen Geberrades 48 ab und liefert damit eine Information über die Winkellage und Winkelgeschwindigkeit der Kurbelwelle, die der Motordrehzahl n entspricht.

Es versteht sich, dass zur Steuerung und/oder Regelung des Verbrennungsmotors 10 bei modernen Kraftfahrzeugen eine Vielzahl weiterer Sensoren vorhanden sein kann, die Drücke, Temperaturen, Winkellagen von Nockenwellen und/oder weitere Betriebsparameter des Verbrennungsmotors 10 erfassen. Die Erfindung ist daher nicht auf eine Verwendung bei einem Verbrennungsmotor 10 beschränkt, der nur die bisher angegebenen Sensoren 22, 42, 46 aufweist. Vorteilhaft ist insbesondere eine weitere Sensorik 50, deren Signale eine Beurteilung der Verbrennungen der Brennraumfüllungen erlaubt. Bei der Sensorik 50 handelt es sich in einer Ausgestaltung um einen oder mehrere Körperschallsensoren. In den Signalen KS der Körperschallsensoren bilden sich Anomalien wie zum Beispiel klopfende Verbrennungen ab. Alternativ oder ergänzend kann es sich bei der Sensorik 50 auch um einen oder mehrere Brennraumdrucksensoren handeln. Weiter alternativ oder ergänzend können Verbrennungsmerkmale auch aus hochauflösenden Signalfolgen des Drehwinkelsensors 46 ermittelt werden.

Zur Steuerung des Verbrennungsmotors 10 werden die Signale des Füllungssensors 22, des Fahrerwunschgebers 42, des Drehwinkelsensors 46, der Sensorik 50 und ggf. die Signale alternativer oder weiterer Sensoren von einem Motorsteuergerät 52 verarbeitet, das daraus Stellsignale zur Steuerung von Funktionen des Verbrennungsmotors 10 bildet. Das Steuergerät (52) weist dazu insbesondere wenigstens einen Prozessor und einen Speicher auf und ist zur Steuerung der hier vorgestellten Verfahren programmiert. In der nicht abschließenden Darstellung der Fig. 1 sind die Stellsignale Zündsignale zzp zur Steuerung der Zündungen, Einspritzimpulsbreiten ti zur Steuerung des Beginns und der Dauer von Einspritzungen von Kraftstoff, ein Stellsignal S_DK zur Steuerung der Drosselklappe 18, ein Stellsignal S-uml zur Steuerung des Umluftventils 36 und eines Stellsignal S_TSQ zur Steuerung des Turbinen-Strömungsquerschnitts 34 .

Die Steuerung des Turbinen-Strömungsquerschnitts 34 erfolgt in einer Ausgestaltung durch Ansteuerung eines elektrischen Schrittmotors 54 mit dem Stellsignal S_TSQ. Der Schrittmotor 54 steuert eine Winkelstellung eines Verstellrings 56, mit dem Leitschaufeln 58.1, 58.n bewegt werden. Die Stellung der ringförmig über den Verstellring 56 in einem ringförmigen Querschnitt verteilten Leitschaufeln 58.1, 58.n legt den Turbinen-Strömungsquerschnitt 34 fest. Dabei umfasst die Festlegung des Turbinen-Strömungsquerschnitts 34 mit Hilfe der Leitschaufeln 58.1, 58.n eine Festlegung der Querschnittsfläche und Ausrichtung der Querschnittsfläche relativ zum Turbinenrad 30.

Das Turbinenrad 30 wird vom Abgas aus einer Richtung und mit einer Geschwindigkeit angeströmt, die durch die Stellung der einstellbaren Leitschaufeln 58.1, 58.n vorgegeben wird. Das in das Turbinenrad 30 eintretende Abgas besitzt zunächst eine zentripetale Komponente 60 seiner Strömungsrichtung und verlässt das Turbinenrad 30 in axialer Richtung 62. Die dabei auf das Turbinenrad 30 übertragene kinetische Abgasenergie treibt über die Welle 64 das Verdichterrad 32 an. In geschlossener Leitschaufel-Position führen große Tangentialkomponenten der Strömungsgeschwindigkeit und ein hohes Enthalpiegefälle über dem Turbinenrad 30 zu einer hohen Turbinenleistung und damit zu einem hohen Ladedruck p_lade. In voll geöffneter Position der Leitschaufeln 58.1, ....., 58.n, ..... ergibt sich der maximale Abgasmassenstrom durch die Turbine bei hohem zentripetalem Anteil des Geschwindigkeitsvektors der Strömung bei einem kleineren Enthalpiegefälle, so dass sich in dieser Stellung der Grundladedruck einstellt.

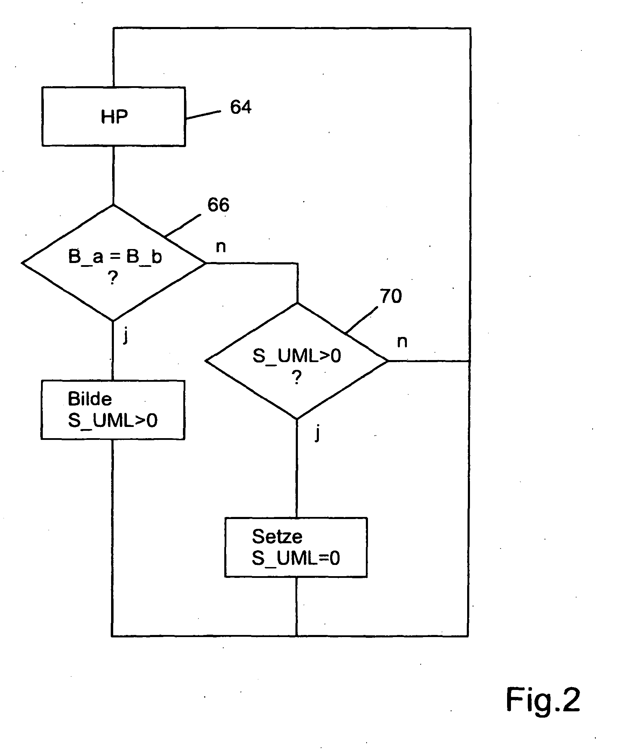

Fig. 2 zeigt ein Flussdiagramm als Ausführungsbeispiel eines erfindungsgemäßen Verfahrens. Der Schritt 64 repräsentiert ein Hauptprogramm HP zur Steuerung des Verbrennungsmotors 10 durch Bildung der Stellgrößen ti, zzp, S_F, S_UML und S_TSQ in Abhängigkeit von Betriebszuständen die durch Drehmomentanforderung, Drehzahl, ein Auftreten von Klopfen und/oder erhöhter Temperaturen und gegebenenfalls weiterer Betriebsparameter charakterisiert werden.

In einem Schritt 66 wird überprüft, ob der aktuelle Betriebszustand B_a einer der bestimmten Betriebszustände B_b ist, in denen der Ladedruck ergänzend zur turbinenseitigen Regelung durch das Stellsignal S_TSQ durch Öffnen des Umluftventils mit dem Stellsignal S_UML verringert werden soll.

Wird die Abfrage im Schritt 66 bejaht, verzweigt das Programm zunächst in den Schritt 68, in dem das Stellsignal S_UML > 0 zur Öffnung des Umluftventils 36 gebildet und ausgegeben wird. Dabei kann es sich um ein binäres Ein/Aus-Signal oder auch um ein stetig veränderbares Tastverhältnis handeln, mit dem das Umluftventil 36 öffnend angesteuert wird. Anschließend kehrt das Programm bei geöffnetem Umluftventil 36 zum Hauptprogramm im Schritt 64 zurück.

Wenn die Abfrage im Schritt 66 dagegen verneint wird, schließt sich eine Abfrage 70 an, in der überprüft wird, ob das Umluftventil 36 mit einem Stellsignal S_UML > 0 öffnend angesteuert wird. Ist dies der Fall, wird das Umluftventil 36 durch Rücksetzen des Stellsignals S_UML im Schritt 72 geschlossen und anschließend zum Hauptprogramm im Schritt 64 zurückgekehrt. Ist das Stellsignal S_UML bereits gleich 0 gewesen, kehrt das Programm aus dem Schritt 70 direkt in das Hauptprogramm im Schritt 64 zurück.

Der bestimmte Betriebszustand B_b liegt in einer Ausgestaltung dann vor, wenn ein Sollwert für den Ladedruck p_lade unter einem Grundladedruck des Abgasturboladers 28 liegt. Ein solcher Sollwert wird unter Umständen gebildet, um Bauteile des Verbrennungsmotors 10 und oder des Abgasturboladers vor einer Beschädigung durch klopfende Verbrennungen und oder zu hohe Temperaturen zu schützen.

In einer alternativen Ausgestaltung liegt der bestimmte Betriebszustand bereits dann vor, wenn ein Sollwert für den Ladedruck innerhalb einer vorgegebenen Bandbreite um den Grundladedruck herum liegt. Dies hat den Vorteil, dass das Umluftventil 10 bereits früh geöffnet wird, so dass noch eine gewisse Regelbandbreite für Eingriffe auf den variablen Turbinen-Öffnungsquerschnitt mit dem Stellsignal TSQ verbleibt.

Der bestimmte Betriebszustand B_b kann insbesondere ein stationärer Betriebszustand sein der dadurch erkannt wird, dass ein Abgasmassenstrom des Verbrennungsmotors einen vorbestimmten Schwellenwert überschreitet. Alternativ oder ergänzend kann der bestimmte Betriebszustand B_b durch hohe Werte der Motordrehzahl n und Füllung von Brennräumen 12.1, 12.2,..., 12.n des Verbrennungsmotors charakterisiert sein und durch entsprechende Schwellenwertvergleiche erkannt werden.

Bei Verbrennungsmotoren mit mehreren Turboladern mit verstellbarer Turbinengeometrie wird das Verfahren und/oder eine oder mehrere seiner Ausgestaltungen entsprechend für einen oder mehrere Turbolader angewendet.

## Patentansprüche

1. Verfahren zur Steuerung eines Turboladers (28), der in einem Luftsammler (40) einen turbinenseitig geregelten Ladedruck erzeugt, und der ein Umluftventil (36) aufweist, das einen Strömungsquerschnitt zwischen dem Luftsammler (40) und einer Saugseite (38) des Turboladers (28) bei einer Verringerung eines aus dem Luftsammler (40) ausfließenden Luftmassenstroms vorübergehend öffnet, wobei der Ladedruck in bestimmten Betriebszuständen (B_b)ergänzend zur turbinenseitigen Regelung durch Verstellung eines Turbinen-Strömungsquerschnitts (34) durch Öffnen des Umluftventils (36) verringert wird, **dadurch gekennzeichnet dass** der bestimmte Betriebszustand (B_b) dann vorliegt, wenn ein Sollwert für den Ladedruck unter einem Grundladedruck des Abgasturboladers (28) liegt.

2. Verfahren nach Anspruch 1, **dadurch gekennzeichnet, dass** der bestimmte Betriebszustand (B_b) ein stationärer Betriebszustand ist.

3. Verfahren nach Anspruch 1, **dadurch gekennzeichnet, dass** der bestimmte Betriebszustand (B_b) dann vorliegt, wenn ein Sollwert für den Ladedruck innerhalb einer vorgegebenen Bandbreite um den Grundladedruck herum liegt.

4. Verfahren nach Anspruch 1, **dadurch gekennzeichnet, dass** der bestimmte Betriebszustand (B_b) dann vorliegt, wenn ein Abgasmassenstrom durch den Turbolader (28) einen vorbestimmten Schwellenwert überschreitet.

5. Verfahren nach Anspruch 1, **dadurch gekennzeichnet, dass** der bestimmte Betriebszustand (B_b) ein Betriebszustand mit hoher Motordrehzahl (n) und hohen Werten für Füllungen von Brennräumen (12.1, 12.2, ..., 12.n) ist.

## Claims

1. Method for controlling a turbocharger (28) which generates a charge pressure, which is regulated at the turbine side, in an air collector (40) and which has an air recirculation valve (36) which temporarily opens a flow cross section between the air collector (40) and a suction side (38) of the turbocharger (28) in the event of a reduction of an air mass flow flowing out of the air collector (40), wherein in certain operating states (B_b), in addition to the turbine-side regulation, the charge pressure is reduced by adjusting a turbine flow cross section (34) by opening the air recirculation valve (36), **characterized in that** the certain operating state (B_b) is present if a setpoint value for the charge pressure lies below a base charge pressure of the exhaust-gas turbocharger (28).

2. Method according to Claim 1, **characterized in that** the certain operating state (B_b) is a steady-state operating state.

3. Method according to Claim 1, **characterized in that** the certain operating state (B_b) is present if a setpoint value for the charge pressure lies within a predefined bandwidth about the basic charge pressure.

4. Method according to Claim 1, **characterized in that** the certain operating state (B_b) is present if an exhaust-gas mass flow through the turbocharger (28) exceeds a predetermined threshold value.

5. Method according to Claim 1, **characterized in that** the certain operating state (B_b) is an operating state with high engine rotational speed (n) and high values for charges of combustion chambers (12.1, 12.2, ..., 12.n).

## Revendications

1. Procédé de commande d'un turbocompresseur (28) qui génère une pression de charge régulée du côté de la turbine dans un collecteur d'air (40) et qui présente une vanne de circulation d'air (36), laquelle ouvre transitoirement une section transversale d'écoulement entre le collecteur d'air (40) et un côté d'aspiration (38) du turbocompresseur (28) en cas de réduction d'un débit massique d'air sortant du collecteur d'air (40), la pression de charge, dans des états de fonctionnement donnés (B_b), étant réduite en complément de la régulation côté turbine par réglage d'une section transversale d'écoulement de turbine (34) en ouvrant la vanne de circulation d'air (36), **caractérisé en ce que** l'état de fonctionnement donné (B_b) est présent lorsqu'une valeur de consigne de la pression de charge est inférieure à une pression de charge de base du turbocompresseur de gaz d'échappement (28).

2. Procédé selon la revendication 1, **caractérisé en ce que** l'état de fonctionnement donné (B_b) est un état de fonctionnement stationnaire.

3. Procédé selon la revendication 1, **caractérisé en ce que** l'état de fonctionnement donné (B_b) est présent lorsqu'une valeur de consigne pour la pression de charge se trouve à l'intérieur d'une largeur de bande prédéfinie autour de la pression de charge de base.

4. Procédé selon la revendication 1, **caractérisé en ce que** l'état de fonctionnement donné (B_b) est présent lorsqu'un débit massique de gaz d'échappement à travers le turbocompresseur (28) dépasse une valeur de seuil prédéfinie.

5. Procédé selon la revendication 1, **caractérisé en ce que** l'état de fonctionnement donné (B_b) est un état de fonctionnement avec un régime moteur (n) élevé et des valeurs élevées des taux de remplissage des chambres de combustion (12.1, 12.2, ..., 12.n).
